# FASCICULE DE BREVET EUROPEEN

(11) **EP 2 156 162 B1**
(45) Date de publication et mention de la délivrance du brevet: **31.10.2012**
(21) Numéro de dépôt: 08805912.6
(22) Date de dépôt: 02.06.2008
(51) Int. Cl.: G01N 1/28, G01N 33/48

(54) **DISPOSITIF DE DEPOT DE CELLULES PAR DECANTATION SUR UNE PLAQUE D'ANALYSE**
VORRICHTUNG ZUR ABSETZUNG VON ZELLEN AUF EINER ANALYSEPLATTE
DEVICE FOR DECANTATION DEPOSITION OF CELLS ON AN ANALYSIS PLATE

(30) Priorité: 08.06.2007 FR 0755610
(43) Date de publication de la demande: 24.02.2010
(73) Titulaire: NOVACYT, 78140 Velizy Villacoublay (FR)
(72) Inventeur: PELTIER, Eric, F-92140 Clamart (FR)
(74) Mandataire: Domenego, Bertrand
(86) Numéro de dépôt international: PCT/FR2008/050969
(87) Numéro de publication internationale: WO 2009/000999

(56) Documents cités:
- EP-A- 1 045 249
- DE-A1- 3 936 093
- DE-U1- 8 416 418
- US-A- 5 318 749

## Description

La présente invention concerne un dispositif de dépôt de cellules par décantation sur une plaque d'analyse, lesdites cellules étant contenues dans une suspension cellulaire comprenant un liquide de conservation cellulaire et lesdites cellules, ladite suspension étant versée dans une chambre de réception placée au-dessus de la plaque d'analyse, et dont le fond est ouvert et s'étend en regard d'une zone de dépôt de cellules de la plaque d'analyse, le fond de la chambre étant en communication fluidique avec un matériau d'absorption du liquide de conservation afin d'absorber progressivement celui-ci et permettre un dépôt homogène par décantation des cellules sur la zone de dépôt de cellules de la plaque d'analyse, le matériau d'absorption étant disposé autour de la zone de dépôt de cellules, le fond de la chambre de réception étant placé à distance de la plaque d'analyse pour délimiter, entre celui-ci et la plaque d'analyse, un trajet de communication fluidique entre cette chambre et le matériau d'absorption.

L'invention concerne également une feuille de matériau d'absorption utilisée dans un tel dispositif.

Le document EP-1 045 249 décrit par exemple un dispositif de dépôt de ce type. Dans ce type de dispositif de dépôt par décantation, le liquide de conservation cellulaire commence à être absorbé dans le matériau absorbant dès que la suspension cellulaire atteint la plaque d'analyse. Un tel schéma d'absorption a pour conséquence que les cellules présentes dans la suspension ont tendance à se déplacer vers le bord de la zone de dépôt de la plaque d'analyse car elles sont entraînées par le liquide de conservation, si l'absorption de ce dernier est trop rapide. Le dépôt cellulaire n'est alors pas homogène sur la zone de dépôt, ce qui pose un problème pour l'analyse ultérieure du dépôt.

Dans le document DE8416418U, le matériau d'absorption est formé de deux couches dont l'une est réalisée en papier et l'autre en carton, la chambre de réception de la suspension appuyant sur la couche de papier et non sur la couche en carton. La couche en papier qui s'étant sous le fond de la chambre n'est pas comprimé par rapport à la zone de cette couche qui s'étant au-delà du fond de la chambre.

Pour pallier cet inconvénient, il a été proposé un dispositif de dépôt dans lequel le matériau absorbant est légèrement pressé par une pièce de serrage et de maintien du matériau absorbant, ce qui, dans un premier temps, ralentit l'absorption du liquide de conservation et permet une décantation verticale et homogène des cellules. Dans un deuxième temps, le matériau absorbant est relâché et l'absorption du liquide de conservation est alors accélérée. Cependant, un tel dispositif demande un temps important de décantation de la suspension cellulaire et exige en outre des manipulations de la pièce de serrage au cours de cette décantation, ce qui complique le processus de d'obtention du dépôt cellulaire.

D'autres dispositifs de dépôt proposent d'utiliser la centrifugation pour accélérer le dépôt cellulaire sur la plaque d'analyse. Le document US-5 318 749 décrit un tel dispositif de dépôt de cellules par centrifugation. Cependant, un dispositif de centrifugation est complexe, encombrant, coûteux et d'une utilisation peu commode. De plus, un tel dispositif ne peut pas être intégré facilement dans une chaîne d'automatisation de l'obtention de dépôts cellulaires du fait de la rotation à grande vitesse d'un tel dispositif. En outre, la centrifugation a tendance à plicaturer les cellules présentes dans la suspension cellulaire car celles-ci s'écrasent sur la plaque d'analyse lors de la centrifugation.

L'invention a pour but de pallier ces inconvénients en proposant un dispositif de dépôt de cellules par décantation ne nécessitant pas de manoeuvres du dispositif au cours de la décantation et garantissant un dépôt uniforme des cellules dans la zone de dépôt cellulaire de la plaque d'analyse.

A cet effet, l'invention concerne un dispositif de dépôt de cellules par décantation du type précité, dans lequel le matériau d'absorption comprend une zone comprimée, dans laquelle le matériau d'absorption est comprimé, ladite zone comprimée s'étendant entre le fond de la chambre de réception et la plaque d'analyse autour de la zone de dépôt de cellules, et une zone non comprimée, dans laquelle le matériau d'absorption n'est pas comprimé, ladite zone non comprimée s'étendant autour de la zone comprimée, au-delà du fond de la chambre de réception par rapport à la zone de dépôt de cellules.

La zone comprimée du matériau d'absorption permet de ralentir dans un premier temps l'absorption du liquide de conservation, ce qui permet un dépôt homogène des cellules dans la zone de dépôt de cellules de la plaque d'analyse. Le liquide de conservation absorbé passe ensuite dans la zone non comprimée du matériau d'absorption ce qui permet d'accélérer le processus d'absorption. On obtient ainsi un dépôt cellulaire uniforme dans un temps de décantation réduit.

Selon d'autres caractéristiques du dispositif de dépôt de cellules de l'invention :
- le fond de la chambre de réception comprend un joint, ledit joint appuyant de façon homogène sur la surface de la zone comprimée du matériau d'absorption ;
- le matériau d'absorption se présente sous la forme d'une feuille munie d'un trou adapté pour s'étendre en regard de la zone de dépôt de cellules de la plaque d'analyse, la zone comprimée formant le bord dudit trou ;
- le matériau d'absorption du liquide de conservation est maintenu en position par serrage entre deux pièces associées à des moyens de fixation et de serrage de l'une sur l'autre, dont l'une porte la chambre de réception de la suspension et l'autre comporte une empreinte de réception de la plaque d'analyse ;
- la chambre de réception est disposée de façon amovible dans un orifice de la pièce portant la chambre de réception, la chambre de réception comprenant au moins un épaulement s'étendant à partir du fond de la chambre de réception le long d'une partie de la paroi de la chambre de réception, ledit épaulement étant agencé pour bloquer la chambre de réception dans l'orifice de la pièce et pour permettre l'extraction de la chambre de réception de l'orifice lorsque l'épaulement est sorti dudit orifice ;
- la pièce portant la chambre de réception présente un évasement autour de l'orifice de la pièce, ledit évasement s'étendant en regard du fond de la chambre de réception et d'une partie de l'épaulement ;
- le dispositif de dépôt comprend une pluralité de chambres de réception placées au-dessus d'une pluralité de plaques d'analyse, lesdites chambres de réception étant solidaires les unes aux autres par l'intermédiaire de ponts de matière ;
- la pièce recevant les chambres de réception comprend une pluralité d'orifices recevant chacun une chambre de réception, l'autre pièce comprenant une pluralité d'empreintes de réception de plaques d'analyse, les ponts de matière reliant les chambres de réception s'étendant entre lesdites pièces ;
- le matériau absorbant se présente sous la forme d'une feuille de papier buvard ; et
- la zone non comprimée du matériau absorbant présente une épaisseur sensiblement comprise entre 0,9 mm et 1,1 mm et en ce que la zone comprimée du matériau absorbant présente une épaisseur sensiblement égale à 0,4 mm.

L'invention concerne également une feuille de matériau d'absorption destinée à être utilisé dans un dispositif de dépôt tel que défini ci-dessus, ladite feuille comprenant un trou destiné à s'étendre en regard d'une zone de dépôt de cellules d'une plaque d'analyse, ladite feuille étant caractérisée en ce qu'elle comprend une zone comprimée, dans laquelle le matériau d'absorption est comprimé, ladite zone comprimée s'étendant autour du trou et une zone non comprimée, dans laquelle le matériau d'absorption n'est pas comprimé, ladite zone non comprimée s'étendant autour de la zone comprimée.

D'autres caractéristiques et avantages de l'invention apparaîtront au cours de la description qui suit, donnée uniquement à titre d'exemple et faite en référence aux dessins annexés.

La Fig. 1 est une vue en coupe schématique d'un exemple de réalisation d'un dispositif de dépôt selon l'invention.

La Fig. 2 est une vue de dessus d'un exemple de réalisation d'un dispositif de dépôt selon l'invention.

La Fig. 3 est une vue en coupe schématique de chambres de réception utilisées dans le dispositif de dépôt de la Fig. 2.

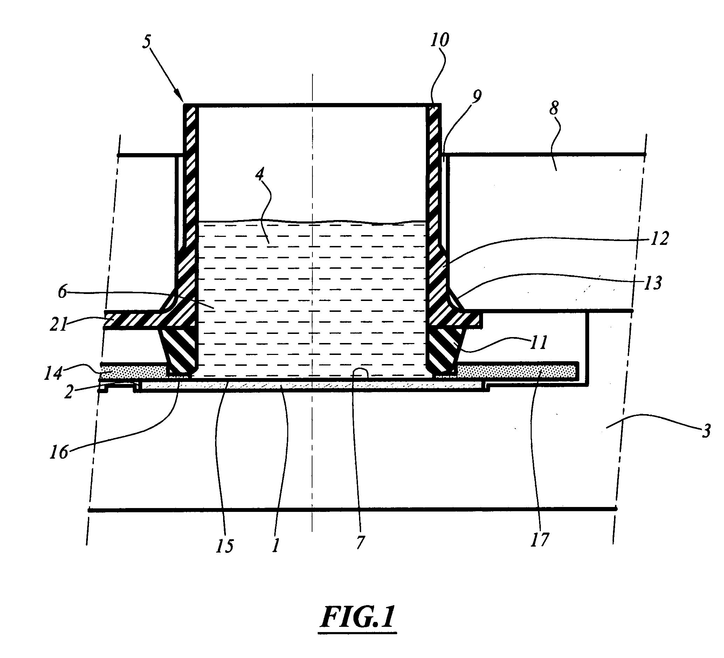

En référence à la Fig. 1, on décrit un dispositif de dépôt de cellules par décantation sur une plaque d'analyse 1. La plaque d'analyse est formée par toute plaque appropriée déjà connue dans l'état de la technique.

Cette plaque 1 est reçue dans une empreinte correspondante 2 d'une pièce 3 formant socle, qui sera décrite plus en détail par la suite.

Une suspension cellulaire 4 est versée dans une chambre de réception 5, placée au-dessus de la plaque d'analyse 1 et dont le fond 6 est ouvert et s'étend en regard d'une zone de dépôt 7 de cellules de la plaque d'analyse 1. La suspension cellulaire 4 comprend un liquide de conservation cellulaire et les cellules que l'on souhaite recueillir sur la plaque d'analyse 1. Cette suspension 4 est par exemple une suspension cytologique cervicale ou une suspension cytologique vaginale. Elle peut aussi être le produit d'une ponction d'organe creux ou plein, ou d'un liquide d'épanchement.

La chambre de réception 5 est par exemple portée par une pièce de support 8 comprenant un orifice 9 dans lequel la chambre de réception 5 est insérée. La pièce de support 8 s'étend en regard de la pièce formant socle 3 et sera décrite plus en détail par la suite. La chambre de réception 5 comprend par exemple un corps 10 sensiblement cylindrique formant une paroi de la chambre de réception.

Le corps 10 comprend au moins un épaulement 12 s'étendant à partir du fond 6 de la chambre de réception le long d'une partie de la paroi de la chambre de réception 5. L'épaulement 12 forme un organe de blocage de la chambre de réception 5 dans l'orifice 9. C'est-à-dire que la chambre de réception 5 présente un diamètre sensiblement égal à celui de l'orifice 9 au niveau de l'épaulement 12. Selon une réalisation, le corps 10 comprend une pluralité d'épaulements 12, par exemple quatre, répartis régulièrement autour du corps 10. Le diamètre de la chambre 5 est alors sensiblement égal à celui de l'orifice 9 au niveau de deux épaulement disposés en regard l'un de l'autre, comme représenté sur la Fig. 1.

La hauteur du corps 10 est dimensionnée pour que la chambre de réception 5 saille hors de l'orifice 9 du côté de l'introduction de la suspension cellulaire 4.

Ainsi, lorsque le dépôt cellulaire a été obtenu sur la plaque d'analyse 1, la pièce de support 8 est retirée et l'opérateur pousse sur la chambre de réception 5 du côté de l'introduction de la suspension cellulaire 4 pour faire sortir l'épaulement 12 de l'orifice 9. La chambre 5 est ainsi libérée et peut sortir de l'orifice 9 du côté du fond 6 de la chambre 5 pour être jetée. Une telle réalisation permet d'éviter que l'opérateur touche la pièce de support ou la chambre de réception 5 du côté du fond de la chambre 5 afin d'éviter tout risque de contact avec des résidus de la suspension cellulaire 4 potentiellement irritant, voire corrosif. L'opérateur peut également éviter le contact avec la chambre de réception 5 du côté de l'introduction de la suspension cellulaire 4 en retournant la pièce de support 8 après obtention du dépôt cellulaire et en appuyant la chambre de réception 5 sur une surface du côté de l'introduction de la suspension cellulaire 4 de sorte à faire sortir l'épaulement 12 de l'orifice 9.

Pour faciliter le retrait de la chambre de réception 5 de l'orifice 9, celui-ci présente un évasement 13 autour de l'orifice 9 s'étendant en regard du fond 6 de la chambre de réception et d'une partie de l'épaulement 12, comme représenté sur la Fig. 1.

Le fond 6 de la chambre comprend un joint 11 annulaire disposé sous le corps 10 de la chambre 5. Le joint 11 est par exemple réalisé en un matériau du type TPE. Le joint 11 s'étend ainsi en saillie de l'orifice 9 du côté du fond 6 de la chambre 5.

Le joint 11 est placé à distance de la plaque d'analyse 1 de sorte que la chambre de réception 5 est en communication fluidique avec un matériau d'absorption 14 du liquide de conservation cellulaire afin d'absorber progressivement celui-ci et permettre un dépôt homogène des cellules sur la zone de dépôt 7 de cellules de la plaque d'analyse 1.

Le matériau d'absorption 14 se présente par exemple sous la forme d'une feuille de papier buvard, munie d'un trou 15 adapté pour s'étendre en regard de la zone de dépôt 7 de cellules de la plaque d'analyse 1.

Le matériau d'absorption 14 s'étend alors autour de la zone de dépôt 7 de la plaque d'analyse 1, entre celle-ci et la chambre de réception 5, plus précisément entre la plaque d'analyse 1 et le joint 11 pour permettre l'absorption progressive du liquide de conservation.

Le matériau d'absorption 14 comprend une zone comprimée 16 s'étendant entre le fond 6 de la chambre de réception 5 et la plaque d'analyse 1 autour de la zone de dépôt 7 de cellules. Par zone comprimée 16, on entend que le matériau d'absorption 14 a été pré-comprimé avant son utilisation dans le dispositif de dépôt de cellules et que cette zone 16 est comprimée par rapport au reste du matériau d'absorption sans qu'une force de pression particulière soit appliquée sur la zone 16. La zone comprimée 16 forme le bord du trou 15 du matériau d'absorption 14. Ainsi, lorsque la suspension 4 est mise à décanter dans la chambre de réception 5, le liquide de conservation de cellule est mis en contact avec la zone comprimée 16 du matériau d'absorption. L'absorption par cette zone est lente, du fait de la compression du matériau d'absorption, ce qui permet de laisser le temps aux cellules de la suspension de se déposer de façon uniforme sur la zone de dépôt 7 de la plaque d'analyse.

Le joint 11 et la zone comprimée 16 sont agencés pour que le joint 11 appuie de façon homogène uniquement sur la surface de la zone comprimée 16, comme représentée sur la Fig. 1. Le joint 11, du fait de son élasticité, empêche que la zone comprimée 16 ne soit complètement écrasée, ce qui empêcherait l'absorption du liquide de conservation cellulaire. Le joint empêche également toute fuite du liquide de conservation cellulaire ailleurs que dans le matériau d'absorption.

Selon une réalisation, la zone comprimée 16 présente une épaisseur sensiblement égale à 0,4 mm pour une épaisseur de matériau d'absorption 14 non comprimé sensiblement comprise entre 0,9 mm et 1,1 mm.

Le matériau d'absorption 14 comprend en outre une zone non comprimée 17 s'étendant au-delà du fond 6 de la chambre de réception 5 par rapport à la zone de dépôt 7 de cellules. C'est-à-dire que la zone non comprimée 17 s'étend autour de la zone comprimée 16, comme représenté sur la Fig. 1. La zone non comprimée 17 s'étend entre la pièce de support 8 et la pièce formant socle 3, sans que la pièce de support 8 n'exerce une force de pression sur la zone non comprimée 17. Comme indiqué plus haut, la zone non comprimée présente une épaisseur sensiblement comprise entre 0,9 mm et 1,1 mm.

La zone non comprimée 17 favorise une absorption rapide du liquide de conservation cellulaire, une fois que celui-ci a franchi la zone comprimée 16. Ainsi, l'absorption se fait en deux phases : une phase d'absorption lente permettant un dépôt homogène de cellules sur la zone de dépôt 7 et une phase d'absorption rapide permettant de réduire le temps de décantation de la suspension cellulaire 4. A titre d'exemple, l'invention permet de passer d'un temps de décantation d'environ 6 heures à un temps de décantation d'environ 15 minutes par rapport à une réalisation où la suspension cellulaire serait laissée à décanter pour obtenir un dépôt cellulaire homogène, avant d'être mise en contact avec un matériau d'absorption pour évacuer le liquide de conservation après que les cellules se sont déposées.

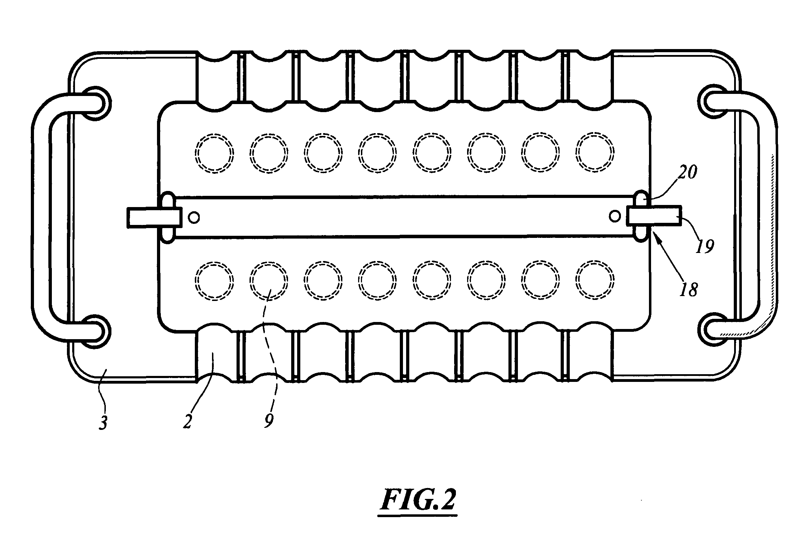

Les pièces de support 8 et formant socle 3 sont fixées et serrées l'une à l'autre par l'intermédiaire de moyens de fixation et de serrage 18, représentés sur la Fig. 2. Les moyens 18 représentés sur cette figure sont un crochet 19 s'engageant autour d'un axe 20, mais ces moyens 18 pourraient être tout autre organe approprié, comme par exemple des vis.

Les moyens de fixation et de serrage 18 sont agencés pour maintenir la chambre de réception 5 en appui sur le matériau d'absorption 14 sans que le joint 11 n'écrase complètement la zone comprimée 16. Le matériau d'absorption est ainsi maintenu en place. De plus, la pièce de support 8 et la pièce formant socle 3 sont agencées pour que la plaque d'analyse 1 soit disposée parfaitement à l'horizontal et complètement plane au niveau de la zone de dépôt 7 afin d'assurer un dépôt homogène de cellules.

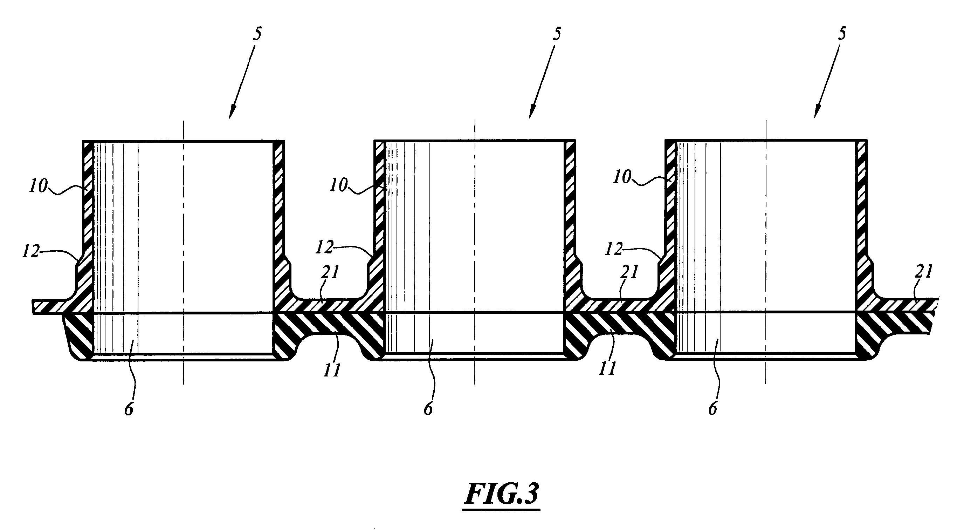

Selon la réalisation représentée sur la Fig. 2, la pièce de support 8 comprend une pluralité d'orifices 9 recevant chacun une chambre de réception 5. Les chambres de réception 5 sont reliées les unes aux autres par un pont de matière 21, comme représenté sur la Fig. 3. La pièce formant socle 3 comprend une pluralité d'empreintes 2 de réception de plaques d'analyse 1 disposées en regard des orifices 9 de la pièce de support 8. Les ponts de matière 21 entre les chambres de réception 5 s'étendent entre la pièce de support 8 et la pièce formant socle 3 au niveau des fonds 6 des chambres de réception 5.

Le dispositif selon l'invention est particulièrement adapté à l'automatisation de l'obtention de dépôts cellulaires, les pièces de support 8 et formant socle 3 formant un ensemble adapté pour fonctionner avec un robot et/ou dans une chaîne de traitement d'échantillons cellulaires.

## Revendications

1. Dispositif de dépôt de cellules par décantation sur une plaque d'analyse (1), lesdites cellules étant contenues dans une suspension cellulaire (4) comprenant un liquide de conservation cellulaire et lesdites cellules, ladite suspension étant versée dans une chambre de réception (5) placée au-dessus de la plaque d'analyse (1), et dont le fond (6) est ouvert et s'étend en regard d'une zone de dépôt (7) de cellules de la plaque d'analyse (1), le fond (6) de la chambre (5) étant en communication fluidique avec un matériau d'absorption (14) du liquide de conservation afin d'absorber progressivement celui-ci et permettre un dépôt homogène par décantation des cellules sur la zone de dépôt (7) de cellules de la plaque d'analyse (1), le matériau d'absorption (14) étant disposé autour de la zone de dépôt (7) de cellules, le fond (6) de la chambre de réception (5) étant placé à distance de la plaque d'analyse (1) pour délimiter, entre celui-ci et la plaque d'analyse (1), un trajet de communication fluidique entre cette chambre (5) et le matériau d'absorption (14), ledit dispositif étant **caractérisé en ce que** le matériau d'absorption (14) comprend une zone comprimée (16), dans laquelle le matériau d'absorption (14) est comprimé, ladite zone comprimée (16) s'étendant entre le fond (6) de la chambre de réception (5) et la plaque d'analyse (1) autour de la zone de dépôt (7) de cellules, et une zone non comprimée (17), dans laquelle le matériau d'absorption (14) n'est pas comprimé, ladite zone non comprimée (17) s'étendant autour de la zone comprimée (16), au-delà du fond (6) de la chambre de réception (5) par rapport à la zone de dépôt (7) de cellules.

2. Dispositif de dépôt selon la revendication 1, **caractérisé en ce que** le fond (6) de la chambre de réception (5) comprend un joint (11), ledit joint (11) appuyant de façon homogène sur la surface de la zone comprimée (16) du matériau d'absorption (14).

3. Dispositif de dépôt selon la revendication 1 ou 2, **caractérisé en ce que** le matériau d'absorption (14) se présente sous la forme d'une feuille munie d'un trou (15) adapté pour s'étendre en regard de la zone de dépôt (7) de cellules de la plaque d'analyse (1), la zone comprimée (16) formant le bord dudit trou (15).

4. Dispositif de dépôt selon l'une quelconque des revendications 1 à 3, **caractérisé en ce que** le matériau d'absorption (14) du liquide de conservation est maintenu en position par serrage entre deux pièces (3, 8) associées à des moyens de fixation et de serrage (19) de l'une sur l'autre, dont l'une porte la chambre de réception (5) de la suspension (4) et l'autre comporte une empreinte (2) de réception de la plaque d'analyse (1).

5. Dispositif de dépôt selon la revendication 4, **caractérisé en ce que** la chambre de réception (5) est disposée de façon amovible dans un orifice (9) de la pièce (8) portant la chambre de réception (5), la chambre de réception (5) comprenant au moins un épaulement (12) s'étendant à partir du fond (6) de la chambre de réception (5) le long d'une partie de la paroi de la chambre de réception (5), ledit épaulement (12) étant agencé pour bloquer la chambre de réception (5) dans l'orifice (9) de la pièce (8) et pour permettre l'extraction de la chambre de réception (5) de l'orifice (9) lorsque l'épaulement (12) est sorti dudit orifice (9).

6. Dispositif de dépôt selon la revendication 5, **caractérisé en ce que** la pièce (8) portant la chambre de réception (5) présente un évasement (13) autour de l'orifice (9) de la pièce (8), ledit évasement (13) s'étendant en regard du fond (6) de la chambre de réception (5) et d'une partie de l'épaulement (12).

7. Dispositif de dépôt selon l'une quelconque des revendications 1 à 6, **caractérisé en ce qu'**il comprend une pluralité de chambres de réception (5) placées au-dessus d'une pluralité de plaques d'analyse (1), lesdites chambres de réception (5) étant solidaires les unes aux autres par l'intermédiaire de ponts de matière (21).

8. Dispositif de dépôt selon la revendication 7 lorsqu'elle dépend de la revendication 5 ou 6, **caractérisé en ce que** la pièce (8) recevant les chambres de réception (5) comprend une pluralité d'orifices (9) recevant chacun une chambre de réception (5), l'autre pièce (3) comprenant une pluralité d'empreintes (2) de réception de plaques d'analyse (1), les ponts de matière (21) reliant les chambres de réception (5) s'étendant entre lesdites pièces (3, 8).

9. Dispositif de dépôt selon l'une quelconque des revendications 1 à 7, **caractérisé en ce que** le matériau absorbant (14) se présente sous la forme d'une feuille de papier buvard.

10. Dispositif de dépôt selon l'une quelconque des revendications 1 à 9, **caractérisé en ce que** la zone non comprimée (17) du matériau absorbant (14) présente une épaisseur sensiblement comprise entre 0,9 mm et 1,1 mm et **en ce que** la zone comprimée (16) du matériau absorbant (14) présente une épaisseur sensiblement égale à 0,4 mm.

11. Feuille de matériau d'absorption (14) destinée à être utilisé dans un dispositif de dépôt selon l'une quelconque des revendications 1 à 10, ladite feuille comprenant un trou (15) destiné à s'étendre en regard d'une zone de dépôt (7) de cellules d'une plaque d'analyse (1), ladite feuille étant **caractérisée en ce qu'**elle comprend une zone comprimée (16), dans laquelle le matériau d'absorption (14) est comprimé, ladite zone comprimée s'étendant autour du trou (15) et une zone non comprimée (17), dans laquelle le matériau d'absorption (14) n'est pas comprimé, ladite zone non comprimée (17) s'étendant autour de la zone comprimée (16).

## Claims

1. A device for decantation deposition of cells on an analysis plate (1), said cells being contained in a cell suspension (4) comprising a cell preservation liquid and said cells, said suspension being poured into a reception chamber (5) which is placed above the analysis plate (1) and the bottom (6) of which is open and extends opposite a cell deposition area (7) of the analysis plate (1), the bottom (6) of the chamber (5) being in fluid communication with an absorption material (14) for the preservation liquid in order to absorb the latter gradually and permit homogeneous decantation deposition of the cells onto the cell deposition area (7) of the analysis plate (1), the absorption material (14) being disposed about the cell deposition area (7), and the bottom (6) of the reception chamber (5) being set at a distance from the analysis plate (1) in order to delimit, between it and the analysis plate (1), a path for fluid communication between the chamber (5) and the absorption material (14), said device being **characterized in that** the absorption material (14) comprises a compressed area (16), in which the absorption material (14) is compressed, said compressed area (16) extending between the bottom (6) of the reception chamber (5) and the analysis plate (1) about the cell deposition area (7), and an uncompressed area (17), in which the absorption material (14) is not compressed, said uncompressed area (17) extending about the compressed area (16), beyond the bottom (6) of the reception chamber (5) in relation to the cell deposition, area (7).

2. A deposition device according to claim 1, **characterized in that** the bottom (6) of the reception chamber (5) comprises a seal (11), said seal (11) bearing homogeneously on the surface of the compressed area (16) of the absorption material (14).

3. A deposition device according to claim 1 or claim 2, **characterized in that** the absorption material (14) is in the form of a sheet provided with a hole (15) adapted to extend opposite the cell deposition area (7) of the analysis plate (1), the compressed area (16) forming the edge of said hole (15).

4. A deposition device according to any one of claims 1 to 3, **characterized in that** the absorption material (14) for the preservation liquid is held in position by clamping between two members (3, 8) associated with means (19) for fixing and clamping one onto the other, one of which members carries the reception chamber (5) for the suspension (4) and the other includes an impression (2) for receiving the analysis plate (1).

5. A deposition device according to claim 4, **characterized in that** the reception chamber (5) is removably disposed in an opening (9) of the member (8) carrying the reception chamber (5), the reception chamber (5) comprising at least one shoulder (12) extending from the bottom (6) of the reception chamber (5) along a part of the wall of the reception chamber (5), said shoulder (12) being arranged so as to lock the reception chamber (5) in the opening (9) in the member (8) and to permit the extraction of the reception chamber (5) from the opening (9) when the shoulder (12) is removed from said opening (9).

6. A deposition device according to claim 5, **characterized in that** the member (8) carrying the reception chamber (5) has a widening (13) aground the opening (9) of the member (8), said widening (13) extending opposite the bottom (6) of the reception chamber (5) and a part of the shoulder (12).

7. A deposition device according to any one of claims 1 to 6, **characterized in that** it comprises a plurality of reception chambers (5) placed above a plurality of analysis plates (1), said reception chambers (5) being firmly connected to one another by means of material bridges (21).

8. A deposition device according to claim 7, when it is dependent on claim 5 or claim 6, **characterized in that** the member (8) receiving the reception chambers (5) comprises a plurality of openings (9), each receiving a reception chamber (5), the other member (3) comprising a plurality of impressions (2) for receiving analysis plates (1), the material bridges (21) connecting the reception chambers (5) extending between said members (3, 8).

9. A deposition device according to any one of claims 1, to 7, **characterized in that** the absorbant material (14) is in the form of a sheet of absorbent paper.

10. A deposition device according to any one of claims 1 to 9, **characterized in that** the uncompressed area (17) of the absorbent material (14) has a thickness comprised substantially between 0.9 mm and 1.1 mm and **in that** the compressed area (16) of the absorbent material (14) has a thickness substantially equal to 0.4 mm.

11. A sheet of absorption material (14) intended to be used in a deposition device according to any one of claims 1 to 10, said sheet comprising a hole (15) intended to extend opposite a cell deposition area (7) of an analysis plate (1), said sheet being **characterized in that** it comprises a compressed area (16), in which the absorption material (14) is compressed, said compressed area extending about the hole (15), and an uncompressed area (17), in which the absorption material (14) is not compressed, said uncompressed area (17) extending about the compressed area (16).

## Patentansprüche

1. Vorrichtung zur Absetzung von Zellen auf einer Analyseplatte (1), wobei besagte Zellen in einer Zellsuspension (4) enthalten sind, die eine Zellkonservierungsflüssigkeit und besagte Zellen enthält, besagte Suspension in eine über der Analyseplatte (1) platzierte Aufnahmekammer (5) gegossen wird, deren Boden (6) offen ist und sich gegenüber einer Zellen-Absetzzone (7) der Analyseplatte (1) erstreckt, wobei der Boden (6) der Kammer (5) mit einem Absorptionsmaterial (14) für die Konservierungsfiüssigkeit in Fluidverbindung steht, um diese nach und nach zu absorbieren und ein gleichmäßiges Absetzen der Zellen auf der Zellen-Absetzzone (7) der Analyseplatte (1) zu ermöglichen, das Absorptionsmaterial (14) um die Absetzzone (7) der Zellen herum angeordnet ist, und der Boden (6) der Aufnahmekammer (5) von der Analyseplatte (1) beabstandet ist, um zwischen dem Boden (6) und der Analyseplatte (1) einen Fluidverbindungsweg zwischen dieser Kammer (5) und dem Absorptionsmaterial (14) zu begrenzen, wobei besagte Vorrichtung **dadurch gekennzeichnet ist, dass** das Absorptionsmaterial (14) einen komprimierten Bereich (16) enthält, in dem das Absorptionsmaterial (14) komprimiert ist, und sich besagter komprimierter Bereich (16) zwischen dem Boden (6) der Aufnahmekammer (5) und der Analyseplatte (1) um die Absetzzone (7) der Zeilen herum erstreckt, sowie einen nicht komprimierten Bereich (17), in dem das Absorptionsmaterial (14) nicht komprimiert ist, und besagter nicht komprimierter Bereich (17) um den komprimierten Bereich (16) herum, über den Boden (6) der Aufnahmekammer (5) hinaus reicht, bezogen auf die Absetzzone (7) der Zellen.

2. Vorrichtung zur Absetzung von Zellen nach Anspruch 1, **dadurch gekennzeichnet, dass** der Boden (6) der Aufnahmekammer (5) eine Dichtung (11) enthält, wobei besagte Dichtung (11) gleichmäßig auf die Fläche des komprimierten Bereichs (16) des Absorptionsmaterials (14) drückt.

3. Vorrichtung zur Absetzung von Zellen nach Anspruch 1 oder 2, **dadurch gekennzeichnet, dass** das Absorptionsmaterial (14) in Form eines Blatts mit einem Loch (15) vorliegt, das gegenüber der Zellen-Absetzzone (7) der Analyseplatte (1) platziert werden soll, wobei der komprimierte Bereich (16) den Rand besagten Lochs (15) bildet.

4. Vorrichtung zur Absetzung von Zellen nach einem der Ansprüche 1 bis 3, **dadurch gekennzeichnet, dass** das Absorptionsmaterial (14) für die Konservierungsflüssigkeit durch Einklemmen zwischen zwei Teilern (3, 8) in Postition gehalten wird, denen Mittel zur Befestigung und zum Einspannen (19) des einen Teils am anderen zugeordnet sind, wobei das eine Teil die Aufnahmekammer (5) der Suspension (4) trägt, und das andere eine Vertiefung (2) zur Aufnahme der Analyseplatte (1) enthält.

5. Vorrichtung zur Absetzung von Zellen nach Anspruch 4, **dadurch gekennzeichnet, dass** die Aufnahmekammer (5) abnehmbar in einer Öffnung (9) des die Aufnahmekammer (5) tragenden Teils (8) angeordnet ist, wobei die Aufnahmekammer (5) mindestens einen Ansatz (12) enthält, der sich ausgehend vom Boden (6) der Aufnahmekammer (5) entlang eines Teils der Wand der Aufnahmekammer (5) erstreckt, und besagter Ansatz (12) so gestaltet ist, dass die Aufnahmekammer (5) in der Öffnung (9) des Teils (8) arretiert wird und ein Herausnehmen der Aufnahmekammer (5) aus der Öffnung (9) ermöglicht wird, wenn der Ansatz (12) aus besagter Öffnung (9) gezogen wird.

6. Vorrichtung zur Absetzung von Zellen nach Anspruch 5, **dadurch gekennzeichnet, dass** das die Aufnahmekammer (5) tragende Teil (8) eine Aufweitung (13) um die Öffnung (9) des Teils (8) aufweist, wobei sich besagte Aufweitung (13) gegenüber dem Boden (6) der Aufnahmekammer (5) und einem Teil des Ansatzes (12) erstreckt.

7. Vorrichtung zur Absetzung von Zellen nach einem der Ansprüche 1 bis 6, **dadurch gekennzeichnet, dass** sie eine Vielzahl von Aufnahmekammern (5) beinhaltet, die über einer Vielzahl von Analyseplatten (1) platziert sind, wobei besagte Aufnahmekammern (5) gegenseitig über Materialbrücken (21) fest miteinander verbunden sind.

8. Vorrichtung zur Absetzung von Zellen nach Anspruch 7, wenn dieser von Anspruch 5 oder 6 abhängt, **dadurch gekennzeichnet, dass** das die Aufnahmekammern (5) tragende Teil (8) eine Vielzahl von Öffnungen (9) enthält, die jeweils eine Aufnahmekammer (5) aufnehmen, und das andere Teil (3) eine Vielzahl von Vertiefungen (2) zur Aufnahme von Analyseplatten (1) enthält, wobei sich die Materialbrücken (21), die die Aufnahmekammern (5) verbinden, zwischen besagten Teilen (3, 8) erstrecken.

9. Vorrichtung zur Absetzung von Zellen nach einem der Ansprüche 1 bis 7, **dadurch gekennzeichnet, dass** das Absorptionsmaterial (14) in Form eines Blatts Löschpapier vorliegt,

10. Vorrichtung zur Absetzung von Zellen nach einem der Ansprüche 1 bis 9, **dadurch gekennzeichnet, dass** der nicht komprimierte Bereich (17) des Absorptionsmaterials (14) eine Dicke ungefähr zwischen 0,9 mm und 1,1 mm aufweist, und der komprimierte Bereich (16) des Absorptionsmaterials (14) eine Dicke von ungefähr 0,4 mm besitzt.

11. Blatt Absorptionsmaterial (14), das in einer Vorrichtung zur Absetzung von Zellen nach einem der Ansprüche 1 bis 10 verwendet werden soll, wobei besagtes Blatt ein Loch (15) aufweist, das gegenüber einer Zellen-Absetzzone (7) einer Analyseplatte (1) platziert werden soll, und besagtes Blatt **dadurch gekennzeichnet ist, dass** es einen komprimierten Bereich (16) enthält, in dem das Absorptionsmaterial (14) komprimiert ist, wobei sich besagter komprimierter Bereich um das Loch (15) und einen nicht komprimierten Bereich (17), in dem das Absorptionsmaterial (14) nicht komprimiert ist, herum erstreckt, und besagter nicht komprimierter Bereich (17) um den komprimierten Bereich (16) herum verläufe.
